# EUROPEAN PATENT SPECIFICATION

(11) **EP 3 369 560 B1**
(45) Date of publication and mention of the grant of the patent: **09.08.2023**
(21) Application number: 18153093.2
(22) Date of filing: 23.01.2018
(51) Int. Cl.: B29C 73/16, B29L 30/00

(54) **TIRE REPAIR DEVICE WITH PLACARD**
REIFENREPARATURVORRICHTUNG MIT PLAKETTE
DISPOSITIF DE RÉPARATION DE PNEUS AVEC ÉCRITEAU

(30) Priority: 26.01.2017 US 201762450778 P; 17.01.2018 US 201815873581
(43) Date of publication of application: 05.09.2018
(73) Proprietor: Illinois Tool Works, Inc., Glenview, Illinois 60025 (US)
(72) Inventor: LEUTHE, Mark T., Glenview, Illinois 60025 (US); SMITH, Bryan, Glenview, Illinois 60025 (US)
(74) Representative: HGF

(56) References cited:
- DE-U1- 20 100 209
- DE-U1- 20 212 103
- DE-U1-202007 009 152
- DE-U1-202008 007 517
- DE-U1-202015 100 123
- US-A1- 2013 228 316
- US-A1- 2016 311 411

## Description

### CROSS-REFERENCE TO RELATED APPLICATIONS

This application claims the benefit of and priority to U.S. Provisional Application, Serial No. 62/450,778, filed 26 January 2017.

### BACKGROUND OF THE INVENTION

### FIELD OF THE INVENTION

The invention relates to a device for dispensing air and/or tire sealant from a canister by means of a pressure source, such as in which the pressure source and canister are contained in a housing, or for which the canister is separate from a compressor.

### DESCRIPTION OF PRIOR ART

Tire repair devices are primarily used for introducing tire sealant into defective tires when a flat tire occurs and for sealing a defective tire. In these devices, a compressor presses compressed air into a canister of tire sealant and by means of corresponding dip tubes and/or inverted bottles, and the tire sealant is then pumped into the defective tire via a valve. After this, the valve can be switched so that the compressor can then inflate the tire. Standard functions from the prior art include either pumping only air in order to inflate balls or air mattresses or performing an air pressure check. In the repair function, the prior art is designed so that the introduction of sealant and air occurs in a single operation. DE 20 2008 007517 U1 discloses a breakdown assistance system for sealing and inflating motor vehicle tires.

Current requirements (e.g., OHSA / GHS - Global Harmonization Standard) dictate that warning labels, typically attached to the top or front surface as adhesive labels, must have local languages represented on the product for the region where the product is going to be sold. For instance, if the product will only be sold in the U.S., English is the primary language, so only English needs to be used on warning labels. If the product would be sold in the U.S. and Spain, English and Spanish would need to be used on the warning label.

Vehicles including tire repair kits are often sold in multiple regions, with some devices requiring over 40 unique primary language variants. Due to this complexity and limited space to represent all of these languages, the customer may need to create multiple part numbers
to create small subsets of languages on a label. This creates complexities at the customer, customer support, manufacturing, sub-supplier levels, etc. A multi-page booklet style label, can be used, but these are expensive to manufacture and may also require multiple part numbers needed by the customer depending upon the number of primary languages being addressed. Additionally, the warnings need to be clearly shown on the product (attached) and are typically the first thing a consumer sees.

There is thus a continuing need for an improved manner of affixing warnings and/or instructions requiring many different languages.

### SUMMARY OF THE INVENTION

The invention is defined in the appended claims. The object of the present invention is to provide an alternate construction for warnings and/or instructions that need to be included with or applied to tire repair kits, and that condense multiple languages onto one label.

The invention includes a device for dispensing pressurized air and/or tire sealant. The device has a housing containing a pressure source, and a placard connected with respect to the housing. The placard includes a plurality of warning and/or instruction messages, wherein each of the plurality of messages is a warning and/or instruction in a different language. The placard of the embodiments of the invention can include the same or similar message in many languages, such as any number up to 40 or more languages, on one or more placard pages. The placard eliminates the need for multiple part numbers for ordering the device, thereby providing ordering, manufacturing, and inventory simplification, throughout the supply chain as well at the OEM. The placard can be attached to the device by any suitable attachment, such as, without limitation, a mechanical fastener, adhesive backing (such as on and along at least one placard edge), or a mechanical feature molded to one or more of the kit surfaces.

### BRIEF DESCRIPTION OF THE DRAWINGS

The above-mentioned objects of this invention will be better understood from the following detailed description taken in conjunction with the drawings wherein:
Fig. 1 is a perspective view of a tire repair device according to one preferred embodiment of this invention;
Fig. 2 shows a mechanical placard connection according to one embodiment of this invention;
Fig. 3 shows a placard and label according to one embodiment of this invention;
Fig. 4 is a top view of a tire repair device;
Fig. 5 is a top view of the device of Fig. 4 with a placard; and
Fig. 6 is a top view of a tire repair device.

### DESCRIPTION OF PREFERRED EMBODIMENTS

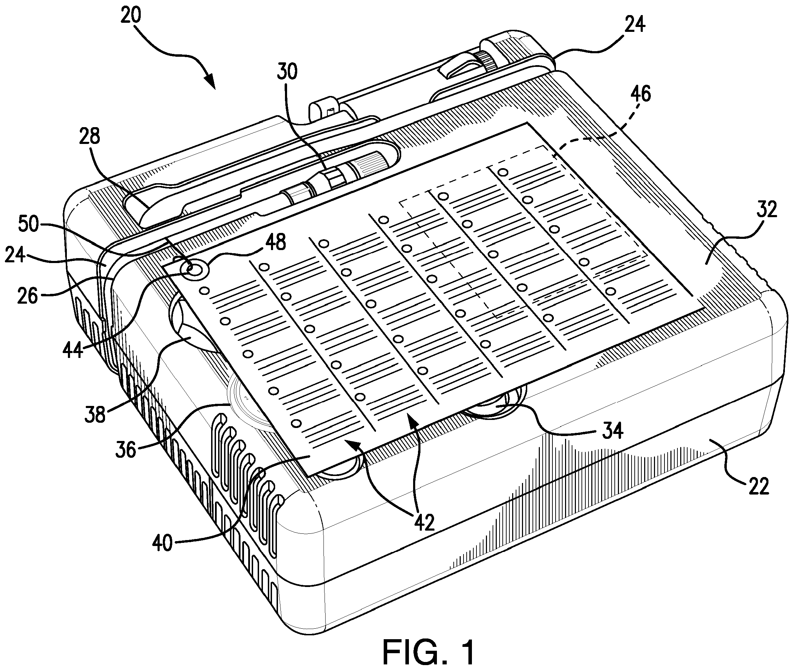

Fig. 1 shows a device 20 for dispensing pressurized air and/or tire sealant. The device includes a housing 22 containing a pressure source and including a slot 24 in the housing surface(s) for storing a hose 26 during non-use. In Fig. 1 the slot extends around the housing 22, allowing the hose 26 to wrap around the housing when in the slot 24. The hose 26 has a first end 28 in combination with the pressure source and/or a canister of sealant within the housing 22 and a second opposing end 30 adapted to connect to a tire stem for inflation and/or delivery of the sealant.

Functional elements are provided by corresponding openings in top surface 32 of the housing 22. These include, for example and without limitation, a switch 34 for switching the device on and off, a manometer 36 for measuring the pressure built up by a pressure source that will described below, and a rotary switch 38 for actuating a valve to switch from sealant to air.

A placard 40 is connected to the housing 22. The placard includes a plurality of printed messages 42 for consumer users of the device 20. The messages 42 can be warning messages or instructional messages. In preferred embodiments, each of the messages 42 is a repeat of a same or similar warning or instruction, and varying according to local requirements and/or translation idiosyncrasies, but in a different language. The placard 40 desirably includes the appropriate message 42 in the official language of each region or locality (e.g., country) where the device 20 is to be sold, alone or in combination with another product (e.g., a vehicle). The multilingual placard 40 allows for one part number for a device with a warning label, and eliminates the need for multiple part numbers for ordering the device with the desired label language, thereby providing ordering, manufacturing, and inventory simplification.

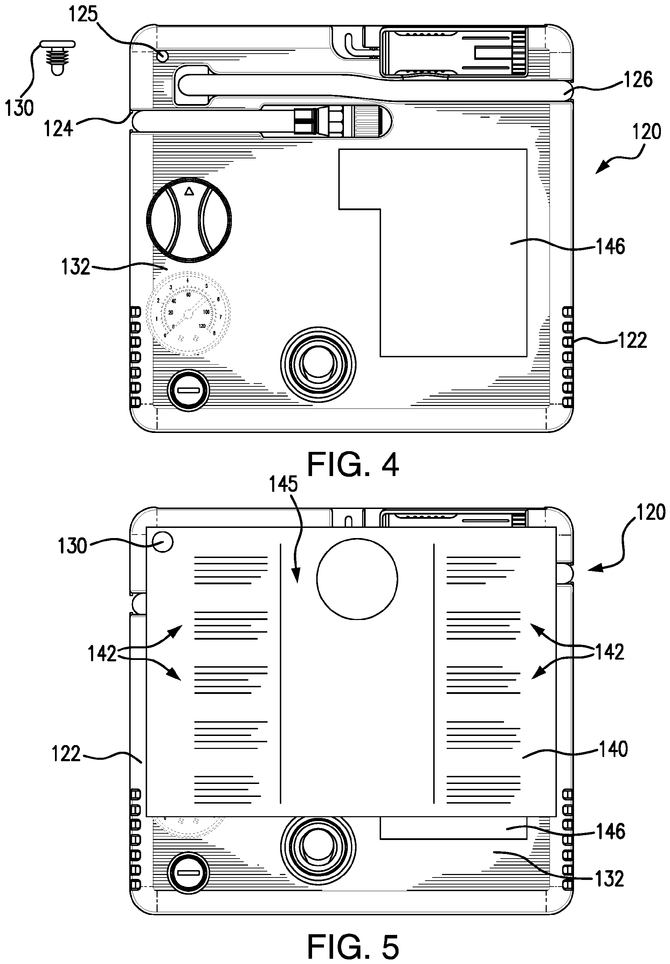

The placard 40 can be formed of any suitable material, such as a heavy stock paper laminated in plastic for durability. The size of the placard and the number of messages thereon can vary depending on need and/or the size of the device. In Fig. 1, the, placard 40 includes six columns of messages 42, each column including a message 42 in six different languages (36 total). However, the placard can include fewer messages, such as shown in Fig. 4, or more than forty messages. The placard can be printed on both sides or include multiple placard pages attached to the device or fastener, or to each other as a book.

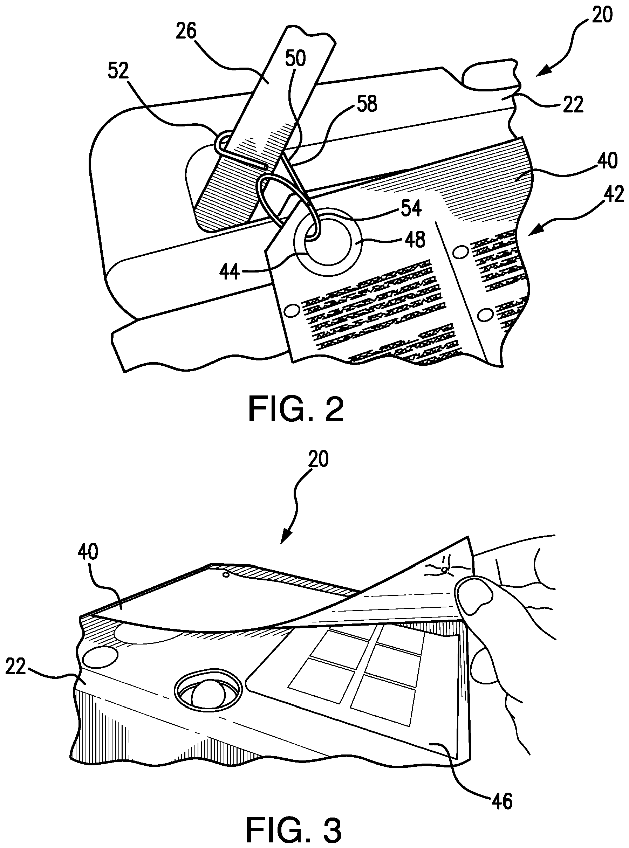

In the embodiment of Fig. 1, the device 20 further includes an instruction label 46 adhered to the top surface 32 of the housing 20. The instruction label 46 can be any suitable adhesive-backed pressure sensitive label, fold-open label, or multipage book. As also shown in Fig. 3, the instruction label 46 is at least partially under the placard 40, or between the housing 22 and the placard 40, when the placard lays flat against the top surface 32. In this embodiment, the placard 40 includes warnings 42 in each of the plurality of languages and the instruction label 46 includes directions for use of the device 20.

The placard 40 can be removably or fixedly attached, directly or indirectly, to the device 20 by any suitable attachment, such as, without limitation, a mechanical fastener, adhesive backing on and/or along a placard edge, or a mechanical feature molded to one or more of the housing surfaces. In embodiments of this invention, such as shown in Fig. 1, the placard 40 includes a hole 44 for receiving the mechanical fastener 50. The hole 44 can optionally be reinforced by an eyelet 48, or other suitable ring around the circumference of the hole 44. The eyelet 48 can be any suitable support structure and/or material, such as commonly available paper/fibrous, plastic, or metal eyelet, ring, rivet, or grommet.

In the embodiment of Fig. 1, the mechanical fastener 50 connects the placard 40 to the hose 26. As shown in Fig. 2, the mechanical fastener 50 can include a first section 52 disposed around the hose 26 near or at the hose end 28, and a second section 54 extending through the hole 44 in the placard 40. In embodiments of this invention, the first section 52 can include a plastic or metal wire loop that is closed around the hose 26, and the second section 54 can include a second plastic or metal wire loop or ring with one side through the hole 44. In embodiments of this invention, the second section 54 is angled with respect to the first section 52, so that the placard 40 lays flat on or parallel to the housing top surface 32 when the hose 26 is placed in the slot. As can be seen in Fig. 3, the plane of the first section loop 52 is, at least approximately, turned 90° with respect to the plane of the second section 54. This configuration can be accomplished by a bend in the transition 58 between the two sections. As will be appreciated, various sizes, shapes, materials, and configurations are available for the fastener 50, and the sections 52 and 54, depending on need.

Figs. 4 and 5 illustrate a mechanical fastener according to another embodiment which is not in line with the claimed invention, where the mechanical fastener is connected to and through a hole in each of the housing and the placard. Fig. 4 shows device 120 witha hose 126 and slot 124, similar to described above for Fig. 1, but with a hole 125 for receiving fastener 130. The hole 125 is formed in the top surface 132 of the housing 122 and has a suitable size (e.g., 5mm) to receive the corresponding fastener 130. As shown in Fig. 5, the fastener 130 is inserted through a correspondingly sized hole in the placard 140 and into the housing hole 125 to hold the placard 140 flat against the top surface 132 of the housing 122. The fastener 130 can be any suitable push pin, clip, or rivet, formed of plastic or metal. As will be appreciated the size, shape, configuration and placement of the housing hole, placard, and placard hole can vary depending on need. Fig. 5 also shows an alternative placard configuration with two columns of messages 142 and a central section 145 including space for vehicle manufacturer information and/or logo, and any other warning symbols or pictorial representations. As will be appreciated the layout of text and logos on the placard can vary depending on need.

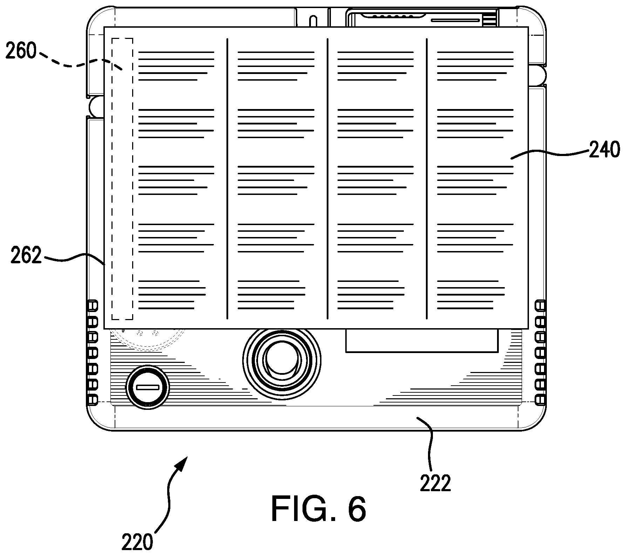

Fig. 6 illustrates a further embodiment of a device (220) which is not in line with the claimed invention, using an adhesive material to attach the placard 240 to the housing 222. The adhesive is included in an adhesive strip 260 along placard edge 262. However, the placement of the placard and the amount and placement of the adhesive can vary, depending on need.

Thus the disclosure provides a device with an improved warning or instructional label. The placard of this disclosure, having required messages in multiple or all official languages of the locations where the device will be used or sold reduces the ordering and inventory issues for tire sealant kits in automobiles sold in multiple localities.
While in the foregoing specification this invention has been described in relation to certain preferred embodiments thereof, and many details have been set forth for purpose of illustration, it will be apparent to those skilled in the art that the device and placard are susceptible to additional embodiments and that certain of the details described herein can be varied considerably without departing from the basic principles of the invention which is defined in the appended claims.

## Claims

1. A device (20) for dispensing pressurized air and/or tire sealant, the device (20) comprising:
a housing (22) containing a pressure source;
a hose (26) connected to the housing (22) and/or the pressure source; and
a placard (40) connected with respect to the housing (22), and including a plurality of warning or instruction messages, wherein each of the plurality of messages is a warning or instruction in a different language,
wherein the housing (22) includes a slot (24) and the hose (26) is insertable into the slot (24) for storage;
wherein the placard (40) is connected to the hose (26) by a mechanical fastener (50); and
wherein the mechanical fastener (50) has a first section (52) disposed around the hose (26) and a second section (54) extending through a hole (44) in the placard (40), wherein the second section (54) is angled with respect to the first section (52) so that the placard (40) lies parallel to the housing (22) when the hose (26) is placed in the slot (24) .

2. The device (20) according to claim 1, further comprising an instruction label (46) adhered to the housing (22) between the housing (22) and the placard (40), wherein the placard includes a warning in each of the plurality of languages and the instruction label includes directions for use of the device.

## Patentansprüche

1. Vorrichtung (20) zum Abgeben von Druckluft und/oder Reifendichtmittel, die Vorrichtung (20) aufweisend:
ein Gehäuse (22), das eine Druckquelle enthält;
einen Schlauch (26), der mit dem Gehäuse (22) und/oder der Druckquelle verbunden ist; und
ein Schild (40), das in Bezug auf das Gehäuse (22) verbunden ist und eine Vielzahl von Warn- oder Anweisungsnachrichten beinhaltet, wobei jede der Vielzahl von Nachrichten eine Warnung oder Anweisung in einer anderen Sprache ist,
wobei das Gehäuse (22) einen Schlitz (24) beinhaltet und der Schlauch (26) zur Aufbewahrung in den Schlitz (24) einführbar ist;
wobei das Schild (40) durch ein mechanisches Befestigungsmittel (50) mit dem Schlauch (26) verbunden ist; und
wobei das mechanische Befestigungselement (50) einen ersten Abschnitt (52) hat, der um den Schlauch (26) herum angeordnet ist, und einen zweiten Abschnitt (54), der sich durch ein Loch (44) in dem Schild (40) erstreckt, wobei der zweite Abschnitt (54) in Bezug auf den ersten Abschnitt (52) angewinkelt ist, so dass das Schild (40) parallel zu dem Gehäuse (22) liegt, wenn der Schlauch (26) in dem Schlitz (24) platziert ist.

2. Vorrichtung (20) nach Anspruch 1, die ferner ein Anweisungsetikett (46) aufweist, das an dem Gehäuse (22) zwischen dem Gehäuse (22) und dem Schild (40) angehaftet ist, wobei das Schild eine Warnung in jeder der Vielzahl von Sprachen enthält und das Anweisungsetikett Anweisungen zur Verwendung der Vorrichtung beinhaltet.

## Revendications

1. Dispositif (20) pour la distribution d'air sous pression et/ou d'un produit anti-crevaison, le dispositif (20) comprenant :
un logement (22) contenant une source de pression ;
un tuyau (26) connecté au logement (22) et/ou à la source de pression ; et
une pancarte (40) reliée par rapport au logement (22), et comprenant une pluralité de messages d'avertissements ou d'instructions, dans laquelle chacun parmi la pluralité de messages est un avertissement ou une instruction dans une langue différente,
dans lequel le logement (22) comprend une fente (24) et le tuyau (26) peut être inséré dans la fente (24) pour le stockage ;
dans lequel la pancarte (40) est reliée au tuyau (26) par une fixation mécanique (50) ; et
dans lequel la fixation mécanique (50) a une première section (52) disposée autour du tuyau (26) et une deuxième section (54) s'étendant à travers un trou (44) dans la pancarte (40), dans lequel la deuxième section (54) est inclinée par rapport à la première section (52) de sorte que la pancarte (40) se trouve parallèle au logement (22) lorsque le tuyau (26) est placé dans la fente (24).

2. Dispositif (20) selon la revendication 1, comprenant en outre une étiquette d'instruction (46) collée au logement (22) entre le logement (22) et la pancarte (40), dans lequel la pancarte comprend un avertissement dans chacune parmi la pluralité de langues et l'étiquette d'instruction comprend des instructions pour l'utilisation du dispositif.
